# EUROPÄISCHE PATENTSCHRIFT

(11) **EP 1 510 750 B1**
(45) Veröffentlichungstag und Bekanntmachung des Hinweises auf die Patenterteilung: **13.12.2006**
(21) Anmeldenummer: 04015596.2
(22) Anmeldetag: 02.07.2004
(51) Int. Cl.: F16P 3/08, G01D 5/28

(54) **Optische Positionserfassungsvorrichtung**
Optical position detection apparatus
Dispositif optique de détection de position

(30) Priorität: 27.08.2003 DE 20313230 U
(43) Veröffentlichungstag der Anmeldung: 02.03.2005
(73) Patentinhaber: SICK AG, 79183 Waldkirch, Breisgau (DE)
(72) Erfinder: Görnemann, Otto, 41564 Kaarst (DE)
(74) Vertreter: Ludewigt, Christoph

(56) Entgegenhaltungen:
- DE-A- 19 649 593
- DE-U- 20 000 868
- US-A- 5 572 075

## Beschreibung

Die Erfindung betrifft eine optische Positionserfassungsvorrichtung nach dem Oberbegriff des Anspruchs 1.

Eine solche Vorrichtung ist aus der DE 200 00 868 U1 bekannt. Mit dieser wird erfasst, ob eine Schutztür, die zur Absicherung einer gefahrbringenden Maschinen oder Anlagen vorgesehen ist, geöffnet oder geschlossen ist. Die Positionserfassungsvorrichtung ist Teil einer Sicherheitseinrichtung, deren Schutzwirkung darauf beruht, dass eine elektrische Verriegelung mit der betreffenden Maschinensteuerung vorgesehen ist, so dass z.B. bei geöffneter Schutztür ein jeweiliger gefährlicher Maschinenzustand durch einen entsprechenden Abschaltvorgang beseitigt oder vermieden werden kann. In der DE 200 00 868 U1 sind die Anwendungsbereiche der Positionserfassungsvorrichtung ausführlich beschrieben, so dass hiermit auf den Offenbarungsgehalt der DE 200 00 868 U1ausdrücklich Bezug genommen wird.

Die bekannte Positionserfassungsvorrichtung hat den Nachteil, dass das zugrunde liegende optische System auf Triangulationsbasis arbeitet. Dadurch sind nur sehr enge Toleranzen möglich, was den Montage- und Justageaufwand erhöht und auch zu Fehlfunktionen, z.B. verfrühtem Abschalten oder Fehlabschalten der Maschine führen kann. Es ist daher wünschenswert, die Toleranzen applikations- und sicherheitsgerecht auslegen zu können.

Aus der DE 196 49 593 A1 ist eine Verriegelungseinrichtung bekannt mit jeweils einem optischen Sensor mit einem Sender und Empfänger, wobei nur in einem geschlossenen Zustand der Verriegelungseinrichtung die vom Sender emittierten optischen Signale auf den Empfänger treffen. Der Sender und Empfänger sind dabei in einem ersten Ausführungsbeispiel in einem Winkel von 90° zueinander angeordnet. Da die Strahlachsen von Sender und Empfänger konvergieren, kann der Lichtstrahl in dieser Ausführung mit einem einfachen Spiegel auf den Empfänger umgelenkt werden. In dem weiteren Ausführungsbeispiel sind Sender und Empfänger in einem Winkel von 180° nebeneinander angeordnet. Zum Schließen der Verriegelungseinrichtung wird der Lichtstrahl durch einen Lichtleiter um 180° umgelenkt. Auch hier kann der Lichtstrahl über einen einfachen Spiegel vom dem Sender zu dem Empfänger umgelenkt werden.

Aus der US 5,572,075 ist eine Sicherheitsverriegelungseinrichtung bekannt, welche einen Faseroptikschalter aufweist, der nur schwer umgehbar oder überbrückbar sein soll. Der Schalter beinhaltet dazu ein faseroptisches "Schloss", welches mit einem "Schlüssel", gebildet aus einem Sender und Empfänger zusammenpassen muss. Das faseroptische "Schloss" weist dabei einen Lichtleiter auf, mit dem das Licht umgelenkt wird. Ein Manipulationsschutz wird durch eine besondere geometrische Form von "Schloss" und "Schlüssel" erreicht. Dabei ist die Form eines Polyeders, nämlich eines Prismas, gewählt. Der "Schlüssel" mit Sender und Empfänger weist die Form eines Prismas auf, das passgenau in das komplementär ausgeformte "Schloss" passt, in dem mittels des Lichtleiters das Licht vom Sender um die Spitze des Prismas herum zum Empfänger geleitet wird.

Ausgehend von diesem Stand der Technik ist es Aufgabe der Erfindung, eine optische Positionserfassungsvorrichtung zu schaffen, die unter Vermeidung der zuvor erwähnten Probleme applikationsspezifischer ausgebildet sein kann.

Diese Aufgabe wird gelöst durch eine Vorrichtung mit den Merkmalen des Anspruchs 1.

Die erfindungsgemäße optische Positionserfassungsvorrichtung weist eine optische Sende-/ Empfangseinheit auf, die einen Sender mit zugeordneter Sendeoptik sowie einen in definiertem Abstand vom Sender angeordneten Empfänger mit zugeordneter Empfangsoptik umfasst, sowie eine optische Lichtleiteinheit, wobei die beiden relativ zueinander bewegbaren Einheiten so ausgeführt sind, dass dann, wenn diese eine definierte Position relativ zueinander einnehmen, ein vom Sender der Sendeoptik der Sende-/Empfangseinheit ausgehendes Lichtbündel auf die Empfangsoptik der Sende-/ Empfangseinheit gelenkt wird. Dabei sind die Sendeoptik und die Empfangsoptik derart angeordnet, dass ihre Strahlachsen ausgehend von der Sende-/ Empfangseinheit divergieren und in einem Winkel von etwa 90° zueinander liegen. Dabei sind in der Lichtleiteinheit drei Spiegel angeordnet, die jeweils den Lichtstrahl um ca. 90° umlenken.

Der wesentliche Vorteil dieser Anordnung von Sender und Empfänger besteht darin, dass mit einfachen geometrischen Abmessungen, wie Abstände oder optischen Durchmessern, applikationsspezifische und sicherheitsgerechte Toleranzen erreicht werden können, was in der bekannten Triangulationsanordnung nicht möglich war. Ein weiterer Vorteil ist, dass in der erfindungsgemäßen Ausbildung mit nur einer Ausführung einer Sende-/Empfangseinheit und verschiedenen Lichtleiteinheiten Positionserfassungsvorrichtungen mit unterschiedlichen Aktivierungsentfernungen und Toleranzen hergestellt werden können. Dadurch kann in kostengünstiger einfacher Weise eine hohe Variantenvielfalt und ein entsprechend großer Einsatzbereich erreicht werden.

Vorteilhafterweise ist als Sender ein Infrarotlicht-Sender vorgesehen.

Der Sender mit zugeordneter Sendeoptik und der Empfänger mit zugeordneter Empfangsoptik sind vorzugsweise in einem gemeinsamen Gehäuse untergebracht, das mit Frontscheiben versehen ist, durch die das Sendelichtbündel und das Empfangslichtbündel hindurchtreten.

Auch ist die Lichtleiteinheit vorteilhafterweise in einem schützenden Gehäuse untergebracht, das mit zwei Frontscheiben versehen ist, durch die das Lichtbündel ein- und austritt.

Die Positionserfassungsvorrichtung kann in Weiterbildung der Erfindung eine dem Empfänger der Sende-/ Empfangseinheit zugeordnete Steuer- und/ oder Auswerteelektronik aufweisen. Die Positionserfassungsvorrichtung kann dann als Schalter, insbesondere einem Positions- und/oder Sicherheitsschalter, zugeordnet sein. Dabei kann in einer bevorzugten Anwendung die Sende-/ Empfangseinheit maschinengehäusefest montiert sein und die Lichtleiteinheit an einer relativ zum Maschinengehäuse beweglichen Schutzeinrichtung, insbesondere einer Schutztür oder dergleichen, befestigt sein.

Die Erfindung wird im folgenden anhand von Ausführungsbeispielen unter Bezugnahme auf die Zeichnung näher erläutert. In der Zeichnung zeigen:
- Fig. 1: eine schematische Darstellung einer ersten Ausführungsform einer optischen Positionserfassungsvorrichtung, deren Sende-/Empfangseinheit Teil eines an einem Maschinengehäuse befestigten Sicherheitsschalters ist und deren Lichtleiteinheit an einer Schutztür befestigt ist;
- Fig. 2 und 3: schematische Darstellungen weiterer Ausführungsformen.

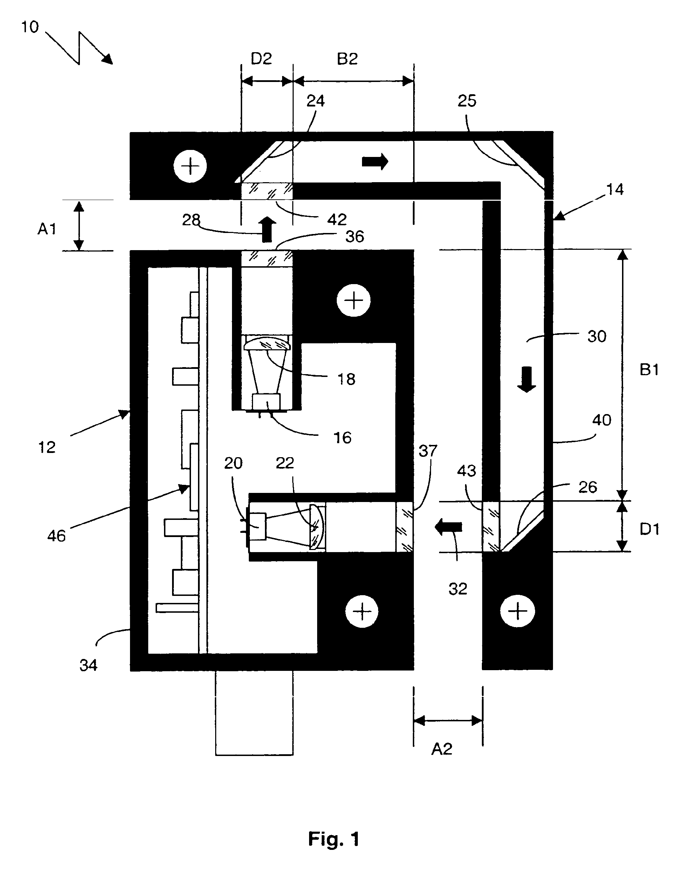

Figur 1 zeigt in schematischer Darstellung eine erste Ausführungsform einer optischen Positionserfassungsvorrichtung 10 mit einer optischen Sende-/Empfangseinheit 12 und einer optischen Lichtleiteinheit 14. Die Sende-/Empfangseinheit 12 umfasst einen Sender 16 mit zugeordneter Sendeoptik 18 sowie einen in definiertem Abstand A vom Sender 16 angeordneten Empfänger 20 mit zugeordneter Empfangsoptik 22.

Die Lichtleiteinheit 14 weist in einem in Fig. 1 dargestellten ersten Ausführungsbeispiel einen ersten, zweiten und dritten Spiegel 24, 25 und 26 auf, die den Lichtstrahl auf einem definierten Weg durch die Lichtleiteinheit 14 führen.

Die beiden relativ zueinander bewegbaren Einheiten 12, 14 sind so ausgeführt, dass dann, wenn sie relativ zueinander die in der Figur 1 dargestellte definierte Position einnehmen, ein vom Sender 16 der Sendeoptik 18 der Sende-/Empfangseinheit 12 ausgehendes paralleles Lichtbündel 28 zumindest im wesentlichen unter Aufrechterhaltung eines Mindestquerschnitts auf den ersten Spiegel 24 der Lichtleiteinheit 14 auftrifft, durch diesen auf den zweiten Spiegel 25 der Lichtleiteinheit 14 gelenkt und durch diesen weiter auf den dritten Spiegel 26 gelenkt wird und schließlich durch den dritten Spiegel 26 auf die Empfangsoptik 22 der Sende-/ Empfangseinheit 12 gelenkt wird. Als Sender 16 kann insbesondere ein Infrarotlicht-Sender vorgesehen sein.

Die Sendeoptik 18 und die Empfangsoptik 22 sind derart angeordnet, dass ihre Strahlachsen ausgehend von der Sende-/Empfangseinheit 12 divergieren und in einem Winkel von etwa 90° zueinander liegen. Das bedeutet in der Darstellung der Fig. 1, dass der Sendelichtstrahl nach oben ausgesandt wird und der Empfangslichtstrahl in einem Winkel von etwa 90° dazu in die Sende-/Empfangseinheit 12 von der Seite her (hier von rechts) wieder eintritt. In der Lichtleiteinheit 14 wird der Lichtstrahl dazu drei mal um 90°, also insgesamt 270°, umgelenkt.

Wie anhand der Figur 1 zu erkennen ist, sind der Sender 16 mit zugeordneter Sendeoptik 18 und der Empfänger 20 mit zugeordneter Empfangsoptik 22 in einem gemeinsamen Gehäuse 34 untergebracht. Dieses Gehäuse 34 ist mit Frontscheiben 36 und 37 versehen, durch die das Sendelichtbündel 28 und das Empfangslichtbündel 32 hindurchtreten. Die Frontscheiben 36 und 37 sind auf benachbarten und senkrecht zueinander stehenden Seiten der Sende-/Empfangseinheit 12 vorgesehen. In dem Gehäuse 34 ist eine dem Empfänger 20 zugeordnete Auswerteelektronik 46 angeordnet. Grundsätzlich kann auch der Sender 16 mit einer solchen Steuerelektronik verbunden sein. Im vorliegenden Fall ist die Sende-/Empfangseinheit 12 Teil eines Positions- und/ oder Sicherheitsschalters. Dabei ist die Sende- / Empfangseinheit 12 an einem Maschinengehäuse und die Lichtleiteinheit 14 an einer relativ zum Maschinengehäuse beweglichen Schutzeinrichtung, z.B. einer Schutztür, befestigt.

Die drei Spiegel 24, 25, 26 der Lichtleiteinheit 14 sind in einem gemeinsamen Gehäuse 40 untergebracht. Auch dieses Gehäuse 40 ist wieder mit Frontscheiben 42 und 43 versehen, durch die einerseits das auf den ersten Spiegel 24 auftreffende Sendelichtbündel 28 hindurchtritt und andererseits das vom dritten Spiegel 26 ausgehende Empfangslichtbündel 32. Innerhalb des Gehäuses 40 verläuft der Lichtstrahl 28 in der Lichtleiteinheit 14 in einem Lichtumlenkkanal 30.

Durch geeignete Wahl der geometrischen Abmessungen, wie
- Abstände A1 und A2 der Frontscheiben 36 und 37 der Sende-/Empfangseinheit 12 zu den Frontscheiben 42 und 42 der Lichtleiteinheit 14;
- optische Sendelichtstrahldurchmesser D2;
- optische Empfangslichtstrahldurchmesser D1;
- Abstand B2 des Sendelichtstrahl zu der Seite des Gehäuses 34, die die Frontscheibe 37 für den Empfangslichtstrahl aufweist und
- Abstand B1 des Empfangslichtstrahl zu der Seite des Gehäuses 34, die die Frontscheibe 36 für den Sendelichtstrahl aufweist,
können applikationsgerechte und sicherheitsgerechte Toleranzen erstellt werden.

Nehmen die beiden Einheiten 12, 14 ihre in der Figur 1 dargestellte definierte Relativposition mit einander gegenüberliegenden Frontscheiben 36 und 42 sowie 37 und 43, wozu definierte Abstände A1 und A2 gehören, ein, so gelangt das von der Sendeoptik 18 ausgehende parallele Lichtbündel 28 zumindest im wesentlichen unter Aufrechterhaltung eines Mindestquerschnitts in Form des parallelen Empfangslichtbündels 32 auf die Empfangsoptik 22. Das System besteht somit aus einem die Sende-/ Empfangseinheit 12 umfassenden, am Maschinengehäuse befestigten aktiven Teil und einem die Lichtleiteinheit 14 umfassenden, an der Schutztür montierten passiven Teil. Das vom Sender 16 ausgestrahlte Licht, vorzugsweise IR-Licht, tritt durch die Frontscheibe 36 aus, gelangt durch die Frontscheibe 42 der Lichtleiteinheit 14 zu deren erstem Spiegel 24, und wird durch diesen auf den zweiten Spiegel 25 reflektiert. Der zweite Spiegel 25 reflektiert dass Licht weiter auf den dritten Spiegel 26. Nach wiederum Umlenkung um 90° tritt das Licht anschließend durch die Frontscheibe 43 der Lichtleiteinheit 14 wieder aus und gelangt durch die Frontscheibe 37 der Sende-/Empfangseinheit 12 zum Empfänger 20. Die Auswertung der Empfangssignale sowie die Erzeugung entsprechender Schaltbefehle -entsprechend der jeweiligen Sicherheitskategorie kann beispielsweise durch die hier im Gehäuse 34 untergebrachte Steuer- und/ oder Auswerteelektronik 46 erfolgen. Grundsätzlich ist jedoch auch eine Auswertung der Empfangssignale außerhalb des Schalters in einem getrennten Auswertegerät möglich. Bevorzugt ist allerdings eine integrierte Auswertung.

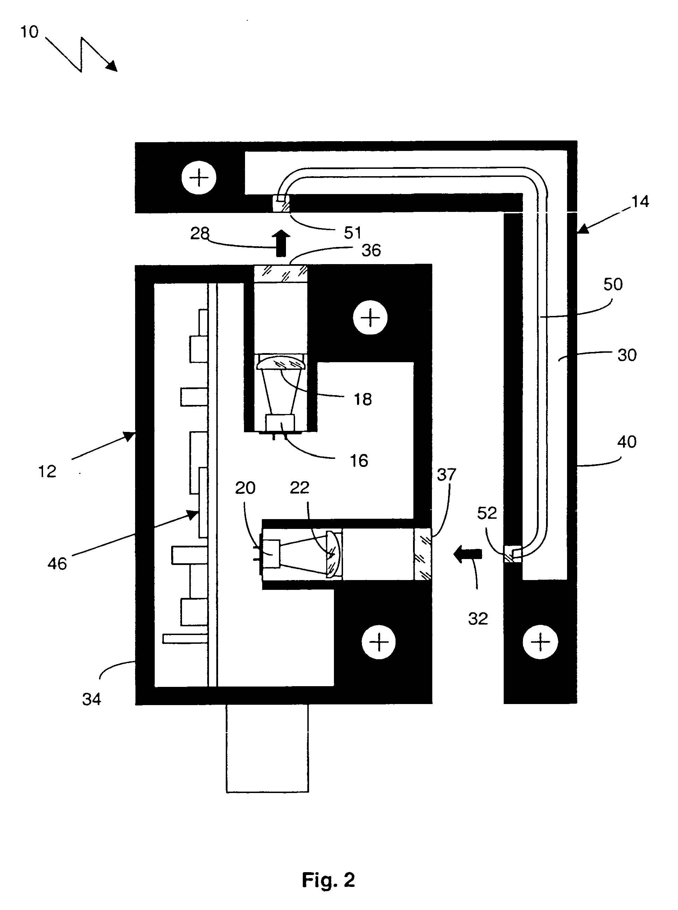

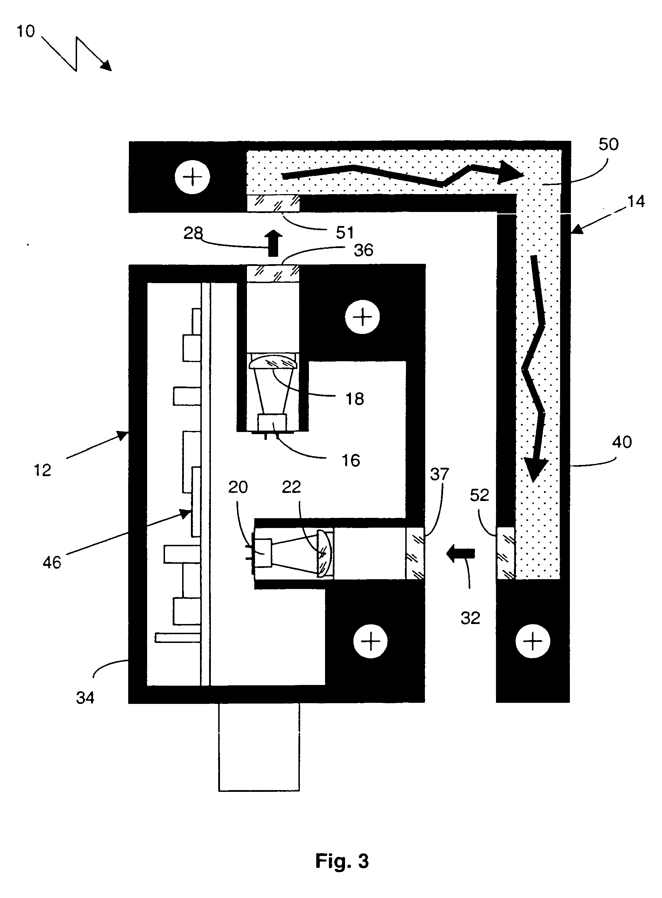

In einem weiteren in Fig. 2 dargestellten Ausführungsbeispiel weist die Lichtleiteinheit 14 anstelle der Umlenkspiegel einen in dem Lichtumlenkkanal 30 angeordneten Lichtleiter auf, der in diesem Beispiel als flexibler Lichtleiter 50, z.B. bestehend aus Lichtleitfasern ausgebildet ist. Die Frontscheibe 42 und 43 der Lichtleiteinheit 14 des ersten Ausführungsbeispiels sind hier ersetzt durch Abschlussfenster 51, 52 oder Lichteinkoppel- und -auskoppeloptiken des Lichtleiters. In einem weiteren, in Fig. 3 dargestellten Ausführungsbeispiel ist der flexible Lichtleiter ersetzt durch einen Lichtleiter 60, bestehend aus einem starren, lichtleitenden Material, in dem das Licht beispielsweise durch Sekundäremission von in dem Material enthaltenen Farbstoffen weitergeleitet wird, wie dies prinzipiell bekannt ist. In diesen Ausführungsbeispielen mit den Lichtleitern wird der Strahlungsquerschnitt und die Parallelität des Strahlenbündels nicht beibehalten.

Die Lichtleitgehäuse können als Profil kostengünstig hergestellt werden. Aufgrund der benötigten kleinen Reichweite können die Anforderungen an die Güte der Reflexionsoberflächen gering gehalten werden. Die Frontscheiben 36, 37, 42 und 43 können beispielsweise zur Erzeugung eines sogenannten Lotus-Blatt-Effekts mit seit kurzem im Handel erhältlichen wasser- und schmutzabweisenden Beschichtungen versehen sein, um die Verfügbarkeit der Systeme zu erhöhen.

Die erfindungsgemäße Positionserfassungsvorrichtung ist beispielsweise auch zur sicheren Bereichsabfrage bei linearen Bewegungen anwendbar. So ist analog zu der bereits geschilderten Anwendung zur sicheren Positionsabfrage eines Achsensystems in vielen Fällen auch eine sichere Bereichsabfrage einer linearen (translatorischen) Bewegung beispielsweise bei Robotern, Handlingsystemen, Krananlagen und/ oder ähnlichen Anwendungen möglich.

## Patentansprüche

1. Optische Positionserfassungsvorrichtung (10) mit einer optischen Sende-/Empfangseinheit (12), die einen Sender (16) mit zugeordneter Sendeoptik (18) sowie einen in definiertem Abstand vom Sender (16) angeordneten Empfänger (20) mit zugeordneter Empfangsoptik (22) umfasst, mit einer optischen Lichtleiteinheit (14), wobei die beiden relativ zueinander bewegbaren Einheiten (12, 14) so ausgeführt sind, dass dann, wenn diese eine definierte Position relativ zueinander einnehmen, ein vom Sender (16) der Sendeoptik (18) der Sende-/Empfangseinheit (12) ausgehendes Lichtbündel (28) auf die Empfangsoptik (22) der Sende-/ Empfangseinheit (12) gelenkt wird, wobei die Sendeoptik (18) und die Empfangsoptik (22) derart angeordnet sind, dass ihre Strahlachsen ausgehend von der Sende-/Empfangseinheit (12) divergieren und in einem Winkel von etwa 90° zueinander liegen, **dadurch gekennzeichnet, dass** in der Lichtleiteinheit (14) drei Spiegel (24, 25, 26) angeordnet sind, die jeweils den Lichtstrahl um ca. 90° umlenken.

2. Positionserfassungsvorrichtung nach Anspruch 1, **dadurch gekennzeichnet, dass** als Sender (16) ein Infrarotlicht-Sender vorgesehen ist.

3. Positionserfassungsvorrichtung nach einem der vorhergehenden Ansprüche, **dadurch gekennzeichnet, dass** der Sender (16) mit zugeordneter Sendeoptik (18) und der Empfänger (20) mit zugeordneter Empfangsoptik (22) in einem gemeinsamen Gehäuse (34) untergebracht sind, das mit zwei Frontscheiben (36 und 37) versehen ist und durch die eine das Sendelichtbündel (28) und durch die andere das Empfangslichtbündel (32) hindurchtritt.

4. Positionserfassungsvorrichtung nach einem der vorhergehenden Ansprüche, **dadurch gekennzeichnet, dass** die drei Spiegel (24, 25, 26) der Lichtleiteinheit (14) in einem gemeinsamen Gehäuse (40) untergebracht sind, das mit zwei Frontscheiben (42 und 43) versehen ist, durch die das Lichtbündel ein- und austritt.

5. Positionserfassungsvorrichtung nach einem der vorhergehenden Ansprüche, **dadurch gekennzeichnet, dass** dem Empfänger (20) der Sende-/ Empfangseinheit (12) eine Steuer- und/ oder Auswerteelektronik (46) zugeordnet ist.

6. Positionserfassungsvorrichtung nach einem der vorhergehenden Ansprüche, **dadurch gekennzeichnet, dass** die Sende-/Empfangseinheit (12) einem Schalter, insbesondere einem Positions- und/oder Sicherheitsschalter zugeordnet ist.

7. Positionserfassungsvorrichtung nach einem der vorhergehenden Ansprüche, **dadurch gekennzeichnet, dass** die Sende-/ Empfangseinheit (12) an einem Maschinengehäuse und die Lichtleiteinheit (14) an einem relativ zum Maschinengehäuse beweglichen Schutzeinrichtung, insbesondere einer Schutztür oder dergleichen, befestigt ist.

## Claims

1. Optical position sensing device (10) having an optical transceiver unit (12) which comprises a transmitter (16) with assigned transmission optics (18), and a receiver (20), arranged at a defined distance from the transmitter (16), with assigned reception optics (22), and having an optical light guide unit (14), the two units (12, 14), which can be moved relative to one another, being designed such that, whenever they assume a defined position relative to one another, a light beam (28) emanating from the transmitter (16) of the transmission optics (18) of the transceiver unit (12) is directed onto the reception optics (22) of the transceiver unit (12), the transmission optics (18) and the reception optics (22) being arranged in such a way that, starting from the transceiver unit (12), their beam axes diverge and are at an angle of approximately 90° to one another, **characterized in that** three mirrors (24, 25, 26) which respectively deflect the light beam by approximately 90° are arranged in the light guide unit (14).

2. Position sensing device according to Claim 1, **characterized in that** an infrared light transmitter is provided as transmitter (16).

3. Position sensing device according to one of the preceding claims, **characterized in that** the transmitter (16) with assigned transmission optics (18), and the receiver (20) with assigned reception optics (22) are accommodated in a common housing (34) which is provided with two front windows (36 and 37), the transmitted light beam (28) penetrating one front window, and the received light beam (32) penetrating the other.

4. Position sensing device according to one of the preceding claims, **characterized in that** the three mirrors (24, 25, 26) of the light guide unit (14) are accommodated in a common housing (40) which is provided with two front windows (42 and 43) through which the light beam enters and exits.

5. Position sensing device according to one of the preceding claims, **characterized in that** the receiver (20) of the transceiver unit (12) is assigned an electronic control and/or evaluation unit (46).

6. Position sensing device according to one of the preceding claims, **characterized in that** the transceiver unit (12) is assigned to a switch, in particular a position and/or safety switch.

7. Position sensing device according to one of the preceding claims, **characterized in that** the transceiver unit (12) is fastened on a machine housing, and the light guide unit (14) is fastened on a protective device, in particular a protective door or the like, which can move relative to the machine housing.

## Revendications

1. Dispositif optique d'enregistrement de position (10) comprenant une unité d'émission/réception (12) optique, qui comprend un émetteur (16) avec une optique d'émission (18) attribuée et un récepteur (20) disposé à une distance définie de l'émetteur (16) avec une optique de réception (22) attribuée, une unité optique de conduction de lumière (14), les deux unités (12, 14) mobiles l'une par rapport à l'autre étant réalisées de telle sorte que, lorsque celles-ci occupent une position définie l'une par rapport à l'autre, un faisceau de lumière (28) partant de l'émetteur (16) de l'optique d'émission (18) de l'unité d'émission/réception (12) est dirigé sur l'optique de réception (22) de l'unité d'émission/réception (12), l'optique d'émission (18) et l'optique de réception (22) étant disposées de telle sorte que leurs axes de faisceau divergent à partir de l'unité d'émission/réception (12) et forment un angle d'environ 90° l'un par rapport à l'autre, **caractérisé en ce que** trois miroirs (24, 25, 26), qui dévient à chaque fois le faisceau lumineux d'environ 90°, sont disposés dans l'unité de conduction de lumière (14).

2. Dispositif d'enregistrement de position selon la revendication 1, **caractérisé en ce qu'**un émetteur de lumière infrarouge est prévu comme émetteur (16).

3. Dispositif d'enregistrement de position selon l'une quelconque des revendications précédentes, **caractérisé en ce que** l'émetteur (16) avec une optique d'émission (18) attribuée et le récepteur (20) avec une optique de réception (22) attribuée sont logés dans un boîtier (34) commun, qui est doté de deux vitres avant (36 et 37), dont l'une laisse passer le faisceau de lumière d'émission (28) et l'autre le faisceau de lumière de réception (32).

4. Dispositif d'enregistrement de position selon l'une quelconque des revendications précédentes, **caractérisé en ce que** les trois miroirs (24, 25, 26) de l'unité de conduction de lumière (14) sont logés dans un boîtier (40) commun qui est doté de deux vitres avant (42 et 43), par lesquelles le faisceau de lumière entre et sort.

5. Dispositif d'enregistrement de position selon l'une quelconque des revendications précédentes, **caractérisé en ce qu'**une unité de commande et/ou d'analyse (46) est attribuée au récepteur (20) de l'unité d'émission et de réception (12).

6. Dispositif d'enregistrement de position selon l'une quelconque des revendications précédentes, **caractérisé en ce que** l'unité d'émission/réception (12) est attribuée à un commutateur, en particulier un commutateur de position et/ou de sécurité.

7. Dispositif d'enregistrement de position selon l'une quelconque des revendications précédentes, **caractérisé en ce que** l'unité d'émission/réception (12) est fixée sur un carter de machine et l'unité de conduction de lumière (14) sur un dispositif de protection mobile par rapport au carter de machine, en particulier une porte de protection ou similaire.
